Europäisches Patentamt

European Patent Office

Office européen des brevets

(11) Publication number: **0 180 280**
**A1**

## (12) EUROPEAN PATENT APPLICATION

(21) Application number: **85201700.3**

(22) Date of filing: **16.10.85**

(51) Int. Cl.⁴: **A 22 C 15/00**, B 29 C 55/00

(30) Priority: **16.10.84 NL 8403164**

(43) Date of publication of application: **07.05.86**
**Bulletin 86/19**

(84) Designated Contracting States: **DE FR GB IT NL**

(71) Applicant: **Fikkert, Tom Franklin, 4, Pr. Frederiklaan,
NL-4835 LE Breda (NL)**

(72) Inventor: **Fikkert, Tom Franklin, 4, Pr. Frederiklaan,
NL-4835 LE Breda (NL)**

(74) Representative: **Hoorweg, Petrus Nicolaas et al,
OCTROOIBUREAU ARNOLD & SIEDSMA
Sweelinckplein 1, NL-2517 GK The Hague (NL)**

(54) A device for suspending meat products, method to manufacturing said device, and an apparatus for use with said device.

㉗ An appliance for hanging up meat products, the appliance consisting of an elongated flexible body (1), being provided at each extremity with an enlarged head (2), whereby said appliance is admirably simple to use in practice, since it is necessary only to bend the body of the appliance into a loop, and to thrust this loop through the meat product, after which the enlarged heads remain caught at one side of the piece of meat. The method for making an appliance of the above-described kind is characterized by: the injection into a mould of a thermoplastic polymer; releasing of the formed body with integral enlarged heads; and stratching the body finally, whereas the apparatus for usage of appliances of the type described above is distinguished by: a holder (7) for an assemblage of appliances: at least twoguide tracks (9, 10) for guiding the enlarged heads; a separation means (8) for parting appliances one-by-one from the assemblage and delivering them to the guide tracks: and a piercing means (6) for thrusting the stretched body of an appliances through a meat product.

Hw/Mv/1 Fikkert
EU 85201700.3/

A device for suspending meat products, method to manu-
facturing said device, and an apparatus for use with
said device

_____

The invention concerns an appliance for hanging up meat products, the appliance consisting of an elongated flexible body

In present practice, it is normal to hang meat products weighing more than 5 kg by means of a rope, which may be made, for example, from twined polypropylene fibre, the ends of the rope being first knotted together, after which the resulting loop is thrust through the meat product, and one end of the loop is then passed through the other. In this manner, the meat product is easy to handle during conveyance. The disadvantage of the appliance described is that the ends of the rope must be knotted each time, requiring handwork; and, should the knot unexpectedly become untied, the piece of meat will fall and thus become soiled. Moreover, the rope is a breeding-place for bacteria.

The invention aims so to improve the kind of appliance described in the introduction, that the above disadvantages are obviated.

The appliance according to the invention is distinguished in that the body is provided at each extremity with an enlarged head.

Owing to these fixed enlarged heads, the appliance is admirably simple to use in practice. It is only necessary to bend the body of the appliance into a loop, and to thrust this loop through the meat product, after which the enlarged heads remain caught at one side of the piece of meat. Disengagement of the loop is hereby effectively prevented, whilst, owing to the elongated shape of the body, the hanging appliances are easily separated from one another during application.

Moreover, it is simple to process the appliance mechanically, by making each enlarged head with two parallel guiding surfaces, so that the heads can function as guidance members.

In order to reinforce the heads, so that they cannot penetrate the meat, each head is strengthened by a ridge, on its side opposite to the elongated body.

The invention is furthermore concerned with a method for making an appliance of the above-described kind, the procedure being characterized by: the injection into a mould of a thermoplastic

2.

polymer; releasing of the formed body with integral enlarged heads; and the final stretching of the body.

By these means, an appliance is efficiently made, which is very hygeinic in use. Of eourse, a thermoplastic material can be selected such that mutual contamination of the meat product and the plastic can not, or can hardly, occur. Owing to the integral moulding of the elongated body with the enlarged heads, a sturdy connection can be accomplished between them; öwing to the chosen form of the appliance, this can be done extremely simply using existing injection moulding techniques. After all, in the mould,a unidirectional stream of injected plastic is established, so that no weaknesses occur in the material as a result of confluence seams, which could otherwise induce fracture of the loop, with consequent wastage of the meat product.

The final stretching of the body provides not only a thinner body, which can easily be deformed into a loop, but also a strong loop, as a result ofthe reorientation of the molecules in a longitudinal direction in the body.

The stretching of the body should preferably take place by means of calender rollers.

Finally, the invention concerns an apparatus for usage of appliances of the type described above, the apparatus being distinguished by: a holder for an assemblage of appliances; at least two guide tracks for guiding the enlarged heads; a separation means for parting appliances one-by-one from the assemblage and delivering them to the guide tracks; and a piercing means for thrusting the stretched body of an appliance through a meat product.

The apparatus can also be equipped with a stretching means, for example calender rollers, in order to cause the elongated body to be stretched whilst the appliance is being fed from the assemblage to the piercing means.

The invention will be further elucidated in the description with drawings, below, of an embodiment.

In the drawings:

Figure 1 shows a schematic view of the meat product, which is provided with a hanging appliance according to the invention;

Figure 2 shows a perspective view of a moulded appliance according to the invention, before and after stretching;

Figure 3 shows the apparatus for the application of an assemblage of appliances according to figure 2;

3.

Figure 4 shows a perspective view revealing the method for thrusting the appliance through a meat product.

In the drawings, number 1 indicates the elongated body, which is provided at both ends with enlarged heads, 2. Although the elongated body is represented here as a prismatic rectangular body, it may equally well be round or oval in cross-section.

Each enlarged head is made as a plate, 3, perpendicular to the longitudinal axis of the body, having a rectangular shape, whereby two pairs of parallel opposing sides are obtained. Either pair of opposing sides can be turned for use as guidance surfaces.

On the side of enlarged head 3 which is opposite to the elongated body, there is moulded a stiffening or strengthening ridge, 4.

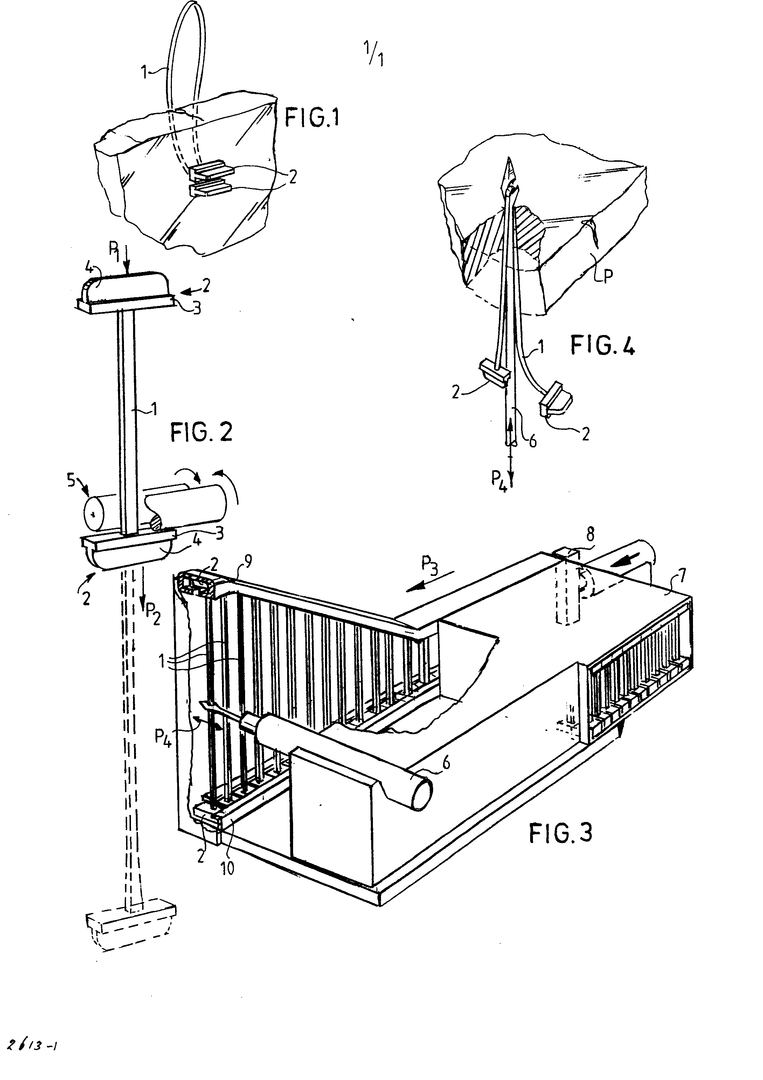

The meat hanging appliance shown in figure 2 with solid lines is the injection-moulded product which is preferably made from plastic material in a mould. The mould interior and its supply channels are so made that, for example, the product is formed by injection of material at arrow P1, so that the interior of the mould can be filled from the top downwards (referring to figure 2) during formation of the product shown by solid lines in figure 2.

Subsequently body 1 can be stretched by means of calender rollers, which are schematically indicated by 5, for example by pulling the lower enlarged head in figure 2 downwards in the direction of arrow P2, so that body 1 is drawn between the calender rollers, whereby the body becomes smaller in cross-section and greater in length. This results in an easily pliable elongated body 1, such that this body can be bent into a loop. These features can be seen from figure 1, and from figure 4, in which body 1 is thrust through the meat product P by means of a needle, 6, after which the needle is retracted leaving the loop behind. On further pulling of loop L in figure 1, both enlarged heads remain on the same side of meat product P, so that the meat product can be hung up by loop L.

The appliance is admirably suited to automatic processing by means of an apparatus, represented schematically in figure 3. Assuming that the product of figure 2 can be made in an assemblage by application of a multiple mould, in which the heads are joined by connecting ducts, then this row of products can be accommodated in a holder, 7. Moreover, a large number of rows can be placed next to one another in the holder.

4.

For repeatedly parting a product 1 from the assemblage in holder 7, a plunger, 8, is fitted, which repeatedly breaks off the exposed end element of a row, so that a large number of separated elements can be pushed into the guidance tracks 9, 10. These guidance tracks diverge in the direction of arrow P3, so that, for instance, by supplying warm air and by the continued pushing of more hanging appliances, the heads which are situated in guides 9 and 10 are moved away from one another, and the body 1 which connects them becomes stretched. In place of, or in addition to, the supply of warm air, the calender rollers 5 of figure 2 can be used. The apparatus is further equipped with a needle, which can be moved back and forth in the direction of arrow P4, the needle repeatedly taking up the stretched body 1 of a hanging appliance, and passing it through a meat product in the manner indicated in figure 4.

Obviously the apparatus of figure 3 is merely schematic, and this apparatus can even be applied in separate components. Thus the needle holder 6 need not be integral with the stretching section, formed by the diverging tracks 9 and 10.

However, the apparatus shown makes clear that, owing to the shape of the hanging appliance, it becomes simple to manoeuvre and process it, by using enlarged heads 2 also as organs of guidance.

The relatively thin and thus easily pliable body 1 always stays correctly aligned and can thus not cause malfunctions.

The invention is not restricted to the embodiments described above, particularly as far as the shape of the enlarged heads is concerned.

CLAIMS

1. Appliance for hanging up meat products, consisting of an elongated flexible body, CHARACTERIZED IN that the body is provided with enlarged heads firmly fixed thereto at both ends.

2. Appliance according to claim 1, CHARACTERIZED IN that the enlarged heads are made with two parallel guidance surfaces.

3. Appliance according to claims 1 and 2, CHARACTERIZED IN that each head is strengthened by a reinforcement ridge on the side thereof opposite to the elongated body.

4. Procedure for making an appliance according to one of the above claims, CHARACTERIZED IN

   - the injection of a thermoplastic polymer into a mould,

   - the releasing of the cast body with integral heads,

   - the final stretching of the body between the enlarged heads.

5. Procedure according to claim 4, CHARACTERIZED IN that the stretching takes place by means of calender rollers.

6. Apparatus for application of one or more appliances according to one of the claims 1-3, CHARACTERIZED IN

   - a holder for an assemblage of appliances arranged in rows,

   - at least two guidance tracks, respectively for the guidance of each of the two enlarged heads of an appliance,

   - separation means for parting appliances one-by-one from the assemblage, and for feeding the enlarged heads into the guidance tracks,

   - puncturing means for thrusting the stretched body through a meat product.

-----

0180280

1/1

FIG.1

FIG. 2

FIG. 4

FIG.3

2613-1

European Patent Office

**EUROPEAN SEARCH REPORT**

Application number

EP 85 20 1700

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | WO-A-8 302 048 (LUGTIGHEID) | 1 | A 22 C 15/00 B 29 C 55/00 |
| A | | 2,3 | |
| | --- | | |
| Y | US-A-4 197 075 (SUZUKI) * Column 1, lines 42-46; column 2, line 62 - column 3, line 40 * | 1 | |
| X | | 4 | |
| | --- | | |
| X | NL-A-6 804 004 (DENNISON) | 4 | |
| A | | 1,6 | |
| | --- | | |
| X | GB-A-1 145 455 (DENNISON) | 4 | TECHNICAL FIELDS SEARCHED (Int. Cl.4) |
| A | | 1 | A 22 C B 29 F B 29 C |
| | --- | | |
| A | US-A-4 155 793 (KLEIN) * Column 5, lines 52-66; figure 11 * | 5 | |
| | --- | | |
| A | GB-A-2 085 348 (DENNISON) * Claims * | 6 | |
| | ----- | | |

The present search report has been drawn up for all claims

| Place of search THE HAGUE | Date of completion of the search 15-01-1986 | Examiner DE LAMEILLIEURE D. |
|---|---|---|